(19) **Europäisches Patentamt**
**European Patent Office**
**Office européen des brevets**

(11) **EP 3 061 976 B1**

(12) **EUROPEAN PATENT SPECIFICATION**

(45) Date of publication and mention
of the grant of the patent:
**13.09.2017 Bulletin 2017/37**

(51) Int Cl.:
**A01F 29/22** *(2006.01)*  **F15B 11/20** *(2006.01)*

(21) Application number: **15191008.0**

(22) Date of filing: **22.10.2015**

(54) **AN AGRICULTURAL FORAGE HARVESTER**

**EINE LANDWIRTSCHAFTLICHE ERNTEMASCHINE**

**UNE MACHINE DE RÉCOLTE AGRICOLE**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **25.02.2015 GB 201503120**

(43) Date of publication of application:
**31.08.2016 Bulletin 2016/35**

(73) Proprietor: **AGCO International GmbH
8212 Neuhausen am Rheinfall (CH)**

(72) Inventor: **Reitemann, Gabriel
87616 Marktoberdorf (DE)**

(74) Representative: **AGCO Intellectual Property
Department
Abbey Park Stoneleigh
Kenilworth, Warwickshire CV8 2TQ (GB)**

(56) References cited:
**EP-A1- 1 757 179      CA-A1- 2 522 387
DE-A1-102007 057 624    GB-A- 2 479 566
US-A1- 2004 020 561     US-A1- 2004 146 406**

Printed by Jouve, 75001 PARIS (FR)

**Description**

This invention concerns a hydraulic arrangement for controlling the movement of a knife grinding stone on a harvesting machine. More specifically, the invention concerns a hydraulic arrangement on a harvesting machine for co-ordinating the movement of a grinding stone with the movement of a part of the casing in which it is housed.

A self propelled harvesting machine, such as a forage harvester is provided with a rotatable cylindrical cutter drum having a plurality of knives which cut the crop as it is processed by the machine. The knives must be sharpened from time to time to maintain their sharpness and this is performed by a grinding stone which travels along a track. The track is fitted above the cutter drum and extends along the length of the drum. The stone and track being located at the front of the machine are housed in a housing which forms a guidance for the harvested crop and protects the track and the grinding stone from dirt and debris from a field which are thrown up while the machine is working. The housing is provided with a flap which may be pivoted open when the grinding stone is in operation. Whilst the stone is not in use, the flap is kept closed to guide the crop and keep the stone and track as free from dirt and debris as much as possible. The movement of the stone and the movement of the flap is typically controlled by respective pistons in a hydraulic arrangement.

Harvesting machines of this type are known from the documents GB 2479566 and CA 2522387 and a hydraulic arrangement for moving separate elements of a system using separate cylinders is known from the document DE 102007057624.

It is known to use sensors on respective pistons to detect whether the flap is open or closed and whether the grinding stone has reached an end of the track so that the opening of the flap can be co-ordinated accordingly. This co-ordination prevents damage to the flap and/or grinding stone assembly. In such an arrangement the movement of each piston is controlled by a respective valve or valves which are controlled by a signal sent from a sensor.

Valves however are expensive and need to be maintained. It is an aim of the invention to provide a hydraulic arrangement which restricts movement of the grinding stone when the flap is closed to prevent unnecessary damage to the grinding stone assembly and/or flap. According to the invention there is provided an agricultural forage harvester as defined by Claim 1.

This way, the movement of the grinding stone is restricted when the flap is closed and permitted when the flap is open.

Preferably, the cylinders are arranged in a parallel circuit. Preferably, each valve arrangement is arranged in series with a respective cylinder. Moreover, each valve arrangement preferably comprises a direct locking valve and a pressure relief valve.

Each valve arrangement preferably comprises one valve which permits fluid flow in one direction and a second valve which permits fluid flow in a different direction. This arrangement allows fluid to flow both to and from the same chamber of each cylinder.

Preferably, the predetermined fluid pressure for a valve of the respective valve arrangement of the second cylinder is greater than the pressure required to move the first cylinder multiplied by a hydraulic ratio of the second hydraulic cylinder.

Preferably, movement of each cylinder activates and/or deactivates an electrical switch which sends a signal to a control unit which monitors movement of the cylinders.

The invention will now be described, by way of example only, with reference to the following drawings, in which:

Figure 1 is a perspective view of a cutter drum and grinding stone of a harvesting machine,

Figure 2 is a circuit diagram of a hydraulic arrangement for controlling movement of the grinding stone in accordance with the invention,

Figure 3 is an alternative embodiment of a hydraulic arrangement for controlling movement of the grinding stone in accordance with the invention, and

Figure 4 is yet a further embodiment of a hydraulic arrangement for controlling movement of the grinding stone in accordance with the invention.

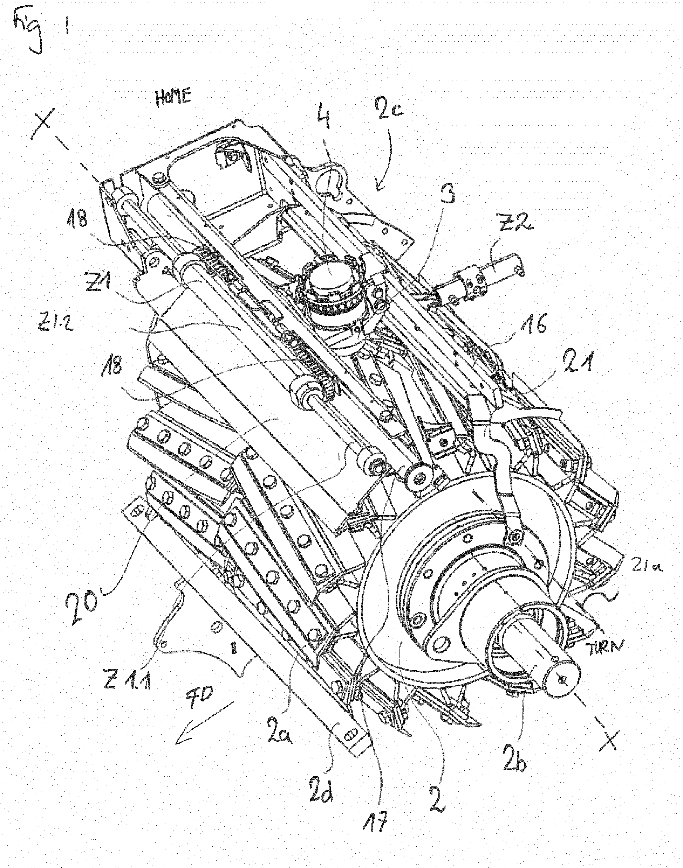

Figure 1 is a perspective view of a rotatable chopper drum 2 for an agricultural machine such as a forage harvester. The chopper drum 2 usually sits at the front of the machine between a set of compression rolls and a cracker unit, or the spout (not shown). Drum 2 rotates about its longitudinal axis X-X on shaft 2b and is provided with a plurality of knives 2a which extend across the surface of the drum. A first set of knives extend across a first half of the drum (from one end to a mid point) and a second set of knives extend from the mid point to the other end of the drum. The compression rolls compress and feed the harvested crop to the chopper drum 2 between a shear bar 2d and the knives 2a which chop the crop into fine parts and move the chopped crop to a cracker unit, or the spout. The chopper drum 2 is a cylinder and the knives 2a are dimensioned and positioned on the drum so that they form a substantially outer cylindrical profile around the drum as the drum is rotated.

Sharpening apparatus 2c is located above the drum 2 and comprises a carriage 3 for holding a grinding, or sharpening stone 4, a guidance rail 16 and a guidance rod 17. Carriage 3 moves back and forth across the length of the drum between the guidance rail 16 and the guidance rod 17 carrying a sharpening stone 4 so that it is in contact with the rotating knives. When the sharpening apparatus is not in operation, the carriage 3 is stored, or parked at the ends of the rail 16 and rod 17 on the right side of the machine as viewed from the rear of the machine towards the forward direction of travel. The forward direction of travel is indicated by arrow FD. This position is referred to as the HOME position as shown in figure 1. The opposite ends of the rail 16 and rod 17 on the left side of the machine where the carriage 3 turns direction so as to return to the HOME position defines a position referred to as the TURN position.

The carriage 3 is driven by a hydraulic cylinder Z1 being of the type with a fixed piston Z1.1 and a movable cylinder barrel Z1.2. This type of cylinder is known as synchronised cylinder and has an equal surface area on each side of the pistons, so that the rod will move at a constant speed (when pressure, P is constant and Q is constant) in both directions. The cylinder barrel Z1.2 is connected to the carriage 3 via a chain drive 18 for providing a ratio in the linear movement so that the carriage reaches both HOME and TURN position.

Sharpening apparatus 2c is enclosed in a casing 20 (partly shown) having a flap 21 pivotable about axis 21a which is parallel to axis X-X. Movement of flap 21 is driven by hydraulic cylinder Z2. To allow carriage 3 and sharpening stone 4 to move between the guidance rail 16 and the guidance rod 17 between the HOME and TURN positions, flap 21 must be open. When the carriage 3 and sharpening 4 are not moving, it is preferable that flap 21 is closed to close the duct which guides the crop and prevent dirt and debris entering casing 20 and damaging the sharpening apparatus 2c.

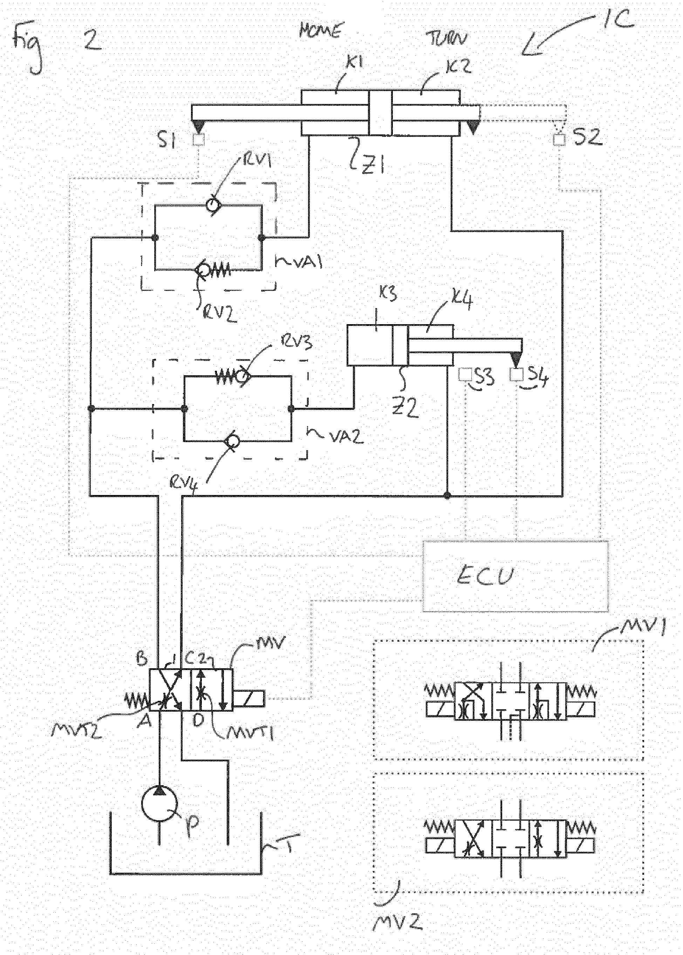

A hydraulic circuit 1C in accordance with the invention is shown in Figure 2. Cylinder Z1 (having chambers K1, K2) is used to move a grinding stone 4 and cylinder Z2 (with chambers K3, K4) is used to move flap 21 away from the chopper drum 2. Cylinder Z2 is a double acting cylinder. Piston rod of cylinder Z2 is provided with a means to activate switch S3 or switch S4. Switches S3, S4 are connected to the electronic control unit ECU of the machine. When switch S3 is closed (while S4 is open), the flap 21 is closed so that grinding stone cannot be moved. When switch S4 is closed (while S3 is open), the flap 21 is opened so that grinding stone can be moved. Cylinder Z1 is a double acting cylinder where the piston rod activates switches S1 and S2 respectively. Switches S1, S2 are connected to the electronic control unit ECU of the forage harvester. When switch S2 is open (while S1 is closed), the grinding stone 4 is at the HOME position. When switch S1 is open (while S2 is closed), the grinding stone 4 is at the TURN position. The dotted lines represent the connections between the switches S1-S4 and valve MV with the ECU.

As explained later on, the switches S1, S2, S3 and S4 are used to determine the position of the grinding stone 4 and flap 21 and are needed to control valve MV. Additionally, they are used to detect failures, such as a blockage preventing movement of the grinding stone. The switches S1, S2, S3 and S4 can be, for example, mechanic feelers, or contactless hall sensors. The terms "open" and "closed" as mentioned above for switches S1, S2, S3 and S4 describe the condition of the switch when delivering a signal to the ECU. When "open", no signal can be delivered and when "closed", a signal may be delivered.

The circuit shown in figure 2 is a constant pressure system with a variable displacement pump P without a load-sensing signal. The displacement of pump P is adjusted so that a constant pressure is supplied. Cylinder Z2 is connected to valve arrangement VA2 denoted by the broken line. Valve arrangement VA2 and cylinder Z2 are connected to the tank T via valve a magnetic spool valve MV, also referred to as multi port valve. Cylinder Z1 is connected to valve arrangement VA1 denoted by the broken line. Valve arrangement VA1 and cylinder Z1 are connected to the tank T via valve MV so that cylinder Z1 and valve arrangement VA1 are connected in parallel to valve arrangement VA2 and cylinder Z2.

Each valve arrangement VA1, VA2 comprises two valves. Valve arrangement VA1 comprises valves RV1 and RV2 and valve arrangement VA2 comprises valves RV3 and RV4. RV2 and RV3 are shown as being pressure relief valves and valves RV1 and RV4 are shown as being pressure lock valves. Within each valve arrangement VA1, VA2 each set of respective valves RV1, RV2 and RV3, RV4 are arranged to permit a flow of fluid in one direction through one valve of the arrangement and in an opposite direction through the other valve of the arrangement so that fluid can flow from and to cylinders K1 and K3 of respective cylinders Z1 and Z2.

The hydraulic arrangement is explained in detail below with reference to the movement of the grinding stone 4 and the flap 21:

1. Starting position

In a "starting position" magnetic spool valve MV is in position 1 and flap 21 is closed, that is cylinder Z2 is retracted so that chamber K3 is compressed and chamber K4 is completely filled. Switch S3 is closed while switch S4 is opened. The pressure P4 in chamber K4 is roughly 200 bar, that is the pump pressure PP. Pressure P3 in the piston chamber K3 counteracts a biased spring setting of valve RV3, which is the pressure P3 required in chamber K3 to counteract the spring of RV3.

In a starting position chamber K2 of cylinder Z1 is completely filled and therefore switch S1 is closed whilst switch S2 is open. The pressure in chamber K2 is approximately 200 bar which equals the pump pressure PP. The pressure P1 of chamber K1 is the same as the pressure in the Tank T.

2. Grinding when flap 21 is opened

When grinding stone 4 is grinding, that is moving between the HOME and TURN positions, the flap 21 must be open. Therefore, the magnetic spool valve MV is switched to position 2. This may be done automatically by the ECU. Chambers K2 and K4 of the cylinders Z1 and Z2 respectively are connected to the tank T via the circuit connections C and D. In position 2, the circuit connections A and B are connected via an integrated throttle MVT1 so that a pressure drop is attained between the connections A and B. The pressure at A is the pump pressure PP which is 200 bar. The pressure at B is the load pressure, that is the pressure required to perform an operation, plus the flow losses at cylinder Z2. Due to the throttle MVT1 and the resulting pressure drop, the pressure at connection B must be less than the pump pressure PP at connection A (200 bar). The throttle is needed to avoid the pump pressure being immediately transmitted to the cylinders Z1, Z2 which would disenable the sequence control. By having the throttles MVT1 and MVT2, the pressure increases slowly so that valves RV2 or RV3 cannot be opened by a pressure peak. Alternatively, instead of having the throttles MVT1 and MVT2 as shown in figures 2 to 4, a single throttle may be installed in the line between pump P and valve MV to serve the same purpose.

Piston chamber K3 of cylinder Z2 is filled with oil via the check valve RV4 which causes the piston rod of cylinder Z2 to extend and thereby open the flap 21 and switch S3. There is no movement of the grinding stone cylinder Z1, because the pressure setting PRV2 of the check valve RV2 is greater than the load pressure P3 needed to extend cylinder Z2. A safety margin is applied to the pressure parameters to ensure that the arrangement functions in low temperatures (when there are greater frictional forces and thus greater load pressures in the cylinder) and also to take into account tolerances of the cylinders. The pressure required to open check valve RV2 is greater than the load pressure P3 to lift the grinding stone flap 21.

The equation to determine the pressure setting, PRV2 of valve RV2 is:

$$PRV2 = P3 \times 1,2$$

If this condition is not fulfilled, the grinding stone 4 will move before the flap 21 is opened.

Furthermore the sum of the pressure settings of valve RV2 and the load pressure P2 required to move the grinding stone 4 in the direction of chamber K2 may not be greater than the maximum or constant pump pressure, PP. If the pressure is greater, the grinding stone 4 cannot be moved when the flap 21 is open. The term pressure setting here means the force applied by the biased spring of valve RV2 to balance a pressure counteracting the valve spring.

This results in a second equation:

$$PRV2 + P2 \leq PP$$

$$PRV2 \leq PP - P2$$

If the piston rod of cylinder Z2 reaches its full extension, it will close switch S4.

3. Grinding: Moving the grinding stone 4 from the HOME to the TURN position

With cylinder Z2 fully extended the load pressure P3 exceeds the setting value of the valve RV2 so that it is opened and the chamber K1 of the cylinder Z1 is filled with oil. Movement of cylinder Z1 towards chamber K2 causes switch S1 to open. If the grinding stone 4 reaches its TURN position, the piston rod closes switch S2.

4. Grinding: Moving the grinding stone 4 from the TURN to HOME position

Upon reaching the TURN position, the grinding stone 4 will return back to the HOME position. After closing switch S2, valve MV is disconnected from electric current. Valve MV switches to position 1 in which pump P is connected to the cylinders Z1, Z2 via the integrated throttle valve MVT2 whereby there is a drop in pressure between connections A and C as explained above. The pressure at A is again the pump pressure PP which is 200 bar and the pressure at C is the load pressure for moving cylinder Z1 as well as any flow losses. The pressure at A is greater than the pressure at B. In position 1, Tank T is connected to the valves RV1, RV2, RV3 and RV4. The load pressure in chamber K2 is also transmitted to chamber K4 of cylinder Z2 so that the pressure P2 in chamber K2 is the same as the pressure P4 in chamber K4. Pressure P4 in chamber K4 is transmitted to chamber K3 via a cylinder piston by a hydraulic ratio since the surface areas on each piston side are different. (Chamber K3 has a circular surface A3 while chamber K4 has an annular surface A4 which is the circular surface area A3 minus the surface area of the piston rod section). This results in the pressure P3 of chamber K3 being P4 x A4/A3 where A4/A3 is the ratio of the annular piston surface area A4 of chamber K4 to the circular surface area A3 of chamber K3.

The spring setting value of the valve RV3 (the pressure which must be overcome to open RV3) must be greater than the load pressure P2 in chamber K2 (applied via chambers K4 and K3) of cylinder Z2 including the hydraulic ratio A4/A3 + load pressure P4 of flap cylinder Z2 (that is the pressure to move the cylinder towards chamber K3). In other words, the pressure setting PRV3 of valve RV3 has to be greater than the pressure which is needed to move the grinding stone 4 in the direction towards chamber K1 multiplied by the ratio between the piston surfaces A4 and A3 of chambers K4 and K3. Again, a safety margin is applied to ensure that the valve functions in all conditions. This results in a third equation:

$$PRV3 > P2 \times \frac{A4}{A3} \times 1{,}2$$

The pressure P4 in chamber K4, (whilst there is movement towards K3) due to the load pressures at the flap 21 and the valve RV3 should not be greater than the maximum, or constant pump pressure PP. If the pressure is greater, the cylinder Z1 cannot be moved towards chamber K3 when the grinding stone is not in the HOME position (indicated by closed switch S1). So the setting PRV3 of the valve RV3 has to be chosen according to the second equation, (otherwise the cylinder Z2 could move in the direction towards K3 before the grinding stone 4 reaches its starting position).

$$PRV3 + P4 \leq PP$$

$$PRV3 \leq PP - P4$$

If cylinder Z2 were to be the same type as cylinder Z1, that is a synchronised cylinder wherein the surface area of A3 were the same as the surface area of A4, the pressure setting of valve RV3 would be determined without a hydraulic ratio.

Further details relating to the settings of valve RV3 (and also RV2) are listed below. As long as valve RV3 is closed, cylinder Z2 will stay extended, while cylinder Z1 moves in the direction towards chamber K1. The oil in chamber K1 flows unhindered via the valve RV1 and valve MV to the tank T as switch S2 opens. Upon the grinding stone 4 reaching the HOME position, switch S1 closes. The load pressure at chamber K2 increases.

5. Closing flap 21 and return to the starting position

The flap 21 closes because the increase in load pressure at chamber K2 increases via connection C. At the same time, the pressure in chamber K4 of the cylinder Z2 increases. The pressure in piston chamber K3 increases until valve RV3 opens. As cylinder Z2 can then retract, switch S4 opens. The switch S3 closes when the starting position of cylinder Z2 is reached.

The system can then start again from step 1.

Due to the constant pressure in the system via the connections A and C the flap 21 is always closed if valve MV is not connected since it is spring biased to position 1 (connecting A to C). As a consequence the pump pressure charges chamber K4. Similarly, the cylinder Z1 always stays in the HOME position as the pump pressure PP is applied to chamber K2 while oil in chamber K1 freely returns to tank T.

Alternatively, circuit C could be connected to an open-centre system having a fixed displacement pump, or a closed-centre system having a variable displacement pump with a load-sensing signal (LS), using the valve MV1 or MV2 instead of valve MV.

If the valve MV is replaced by valve MV1, (see figure 1a) this may result in an open-centre-system (having a fixed displacement pump), or a closed-centre-system (having a variable displacement pump). In either case, a load-sensing signal (LS) is provided. In an open-centre-system, the oil flow would be returned to the tank T with no demand (the return path being controlled by LS) while in a closed-centre-system, the displacement of the pump P is adjusted by the LS signal adapting the flow of oil. Valve MV1 comprises a third position which is the starting position and which disconnects the oil flow from pump P to the cylinders Z1, Z2.

Valve MV2 as shown in figure 2a is used for an open-centre-system (a fixed displacement pump) without a load-sensing signal (LS) but with a third position 3 which is the starting position and which disconnects the oil flow from pump P to cylinders Z1, Z2.

The third position provided by valve MV1 or MV2 may be used to stop movement of grinding stone 4 and carriage 3 in the middle of the track and permit a change of the grinding stone 4.

The ECU also contains measures which be taken in case there is a failure of movement of the grinding stone 4 and/or the flap 21. For example, stopping the current supply to valve MV, enables any blockages to be freed. In this case the conditions of the switch S1, S2, S3 and S4 settings have to be checked, so that there will be no collision between the grind stone and the grindstone flap 21.

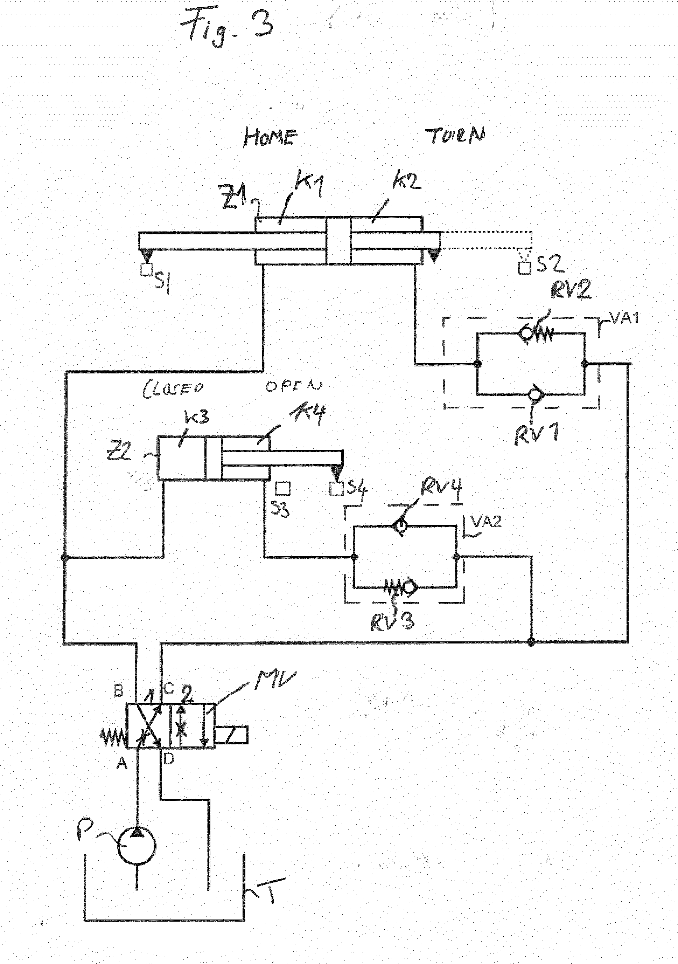

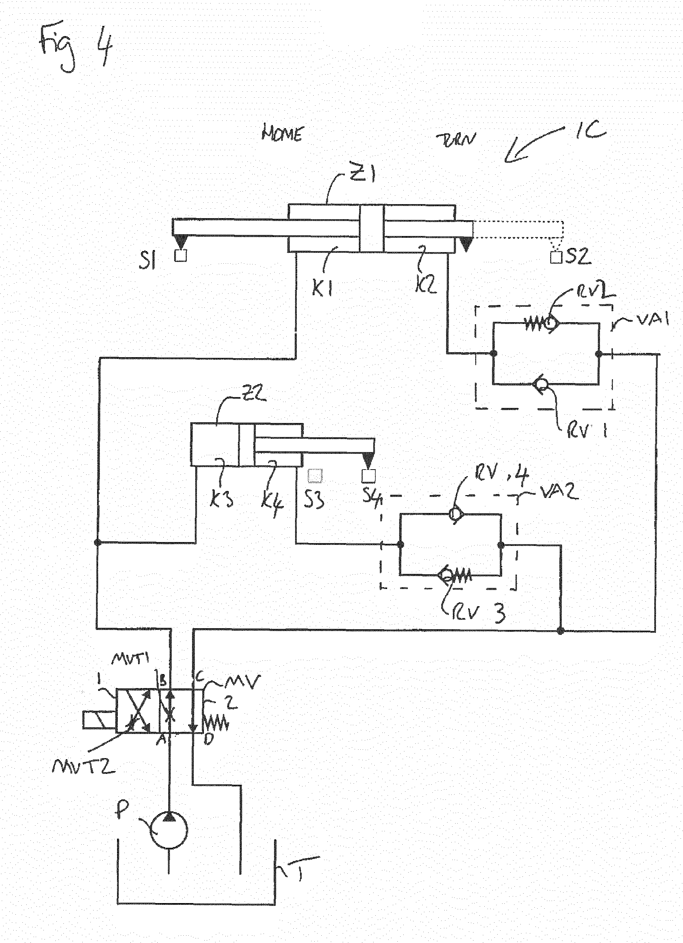

Further embodiments of the invention are shown in Figures 3 and 4 in which the ECU and connections to it have been omitted. In figures 3 and 4 the valves RV1, RV2, RV3, RV4 are moved within the hydraulic circuit and the cylinders Z1 and Z2 are assigned the functions in the table below which result in the pressure settings being adapted. For comparison, the embodiment shown in figure 2 is also shown:

|  | K1 | K2 | K3 | K4 | PRV2 | PRV3 |
|---|---|---|---|---|---|---|
| Figure 2 | HOME | TURN | CLOSED | OPENED | P3 x 1,2 | $> P2 \times \dfrac{A4}{A3} \times 1,2$ |
| Figure 3 | HOME | TURN | CLOSED | OPENED | P3 x 1,2 | $> P2 \times 1,2$ |
| Figure 4 | TURN | HOME | OPENED | CLOSED | P4 x 1,2 | $> P1 \times \dfrac{A3}{A4} \times 1,2$ |

The valves RV2, RV3 are shown in the figures as being check valves which are spring-biased against the direction of flow of liquid. Alternatively, any valve arrangement which can permit a fluid flow above a pre-set pressure level may be installed instead. For example, pressure limiting valves may be installed instead.

## Claims

1. An agricultural forage harvester comprising a chopper drum (2) having a plurality of knives (2a) that extend across the surface of the drum and form an outer cylindrical profile around the drum as the drum is rotated, a knife sharpening arrangement (2c) located above the drum (2), wherein the knife sharpening arrangement comprises a knife sharpening device (4) and a flap (21) of a housing (20) in which the knife sharpening device (4) is housed, and a hydraulic circuit (1C) for controlling movement of the knife sharpening device and the flap, wherein said circuit comprises a pressure source, a pressure sink, a multi-port valve, a first hydraulic cylinder (Z1) which moves the knife sharpening device and a second hydraulic cylinder (Z2) which moves the flap, **characterised in that**,
   each cylinder is connected to a respective valve arrangement (V1, V2), each respective valve arrangement will conduct fluid when a predetermined fluid pressure is reached, movement of the multiport valve moves the first or second hydraulic cylinder (Z1, Z2) and **in that** when one of said first or second cylinders (Z1, Z2) reaches a maximum deflection, the pressure in said circuit is greater than the predetermined fluid pressure (PRV2, PRV3) of the respective valve arrangement (VA1, VA2) of the other of said first or second cylinders (Z1, Z2) so that said other of said first or second cylinders moves.

2. An agricultural forage harvester as claimed in claim 1 wherein the cylinders (Z1, Z2) are arranged in parallel.

3. An agricultural forage harvester as claimed in claim 1 or claim 2 wherein each valve (VA1, VA2) arrangement is arranged in series with a respective cylinder (Z1, Z2) respectively.

4. An agricultural forage harvester as claimed in any preceding claim wherein each valve arrangement (VA1, VA2) comprises two valves (RV1, RV2, RV3, RV4) which are arranged in parallel to each other.

**5.** An agricultural forage harvester as claimed in claim 4 wherein each valve arrangement (VA1, VA2) comprises a direct locking valve (RV1, RV4) and a pressure relief valve (RV2, RV3).

**6.** An agricultural forage harvester as claimed in claim 4 or claim 5 wherein each valve arrangement (VA1, VA2) comprises one valve which permits fluid flow in one direction and a second valve which permits fluid flow in a different direction.

**7.** An agricultural forage harvester as claimed in any preceding claim wherein the predetermined fluid pressure for a valve (RV3) of the respective valve arrangement of the second cylinder is greater than the pressure required to move the first cylinder multiplied by a hydraulic ratio of the second hydraulic cylinder.

**8.** An agricultural forage harvester as claimed in any preceding claim wherein movement of each cylinder activates and/or deactivates an electrical switch which sends a signal to a control unit which monitors movement of the cylinders.

**Patentansprüche**

**1.** Landwirtschaftlicher Feldhäcksler mit einer Häckslertrommel (2), mit einer Mehrzahl von Messern (2a), die sich über die Oberfläche der Trommel erstrecken und ein äußeres zylindrisches Profil um die herum Trommel bilden, wenn sich die Trommel dreht, einer oberhalb der Trommel (2) angeordneten Messerschärfanordnung (2c), wobei die Messerschärfanordnung eine Messerschärfvorrichtung (4) und eine Klappe (21) eines Gehäuses (20) aufweist, in dem die Messerschärfvorrichtung (4) aufgenommen ist, und einem hydraulischen Kreis (1C) zum Steuern/Regeln der Bewegung der Messerschärfvorrichtung und der Klappe, wobei der Kreis eine Druckquelle, eine Drucksenke, ein Mehrwegeventil, einen die Messerschärfvorrichtung bewegenden ersten Hydraulikzylinder (Z1) und einen die Klappe bewegenden zweiten Hydraulikzylinder (Z2) aufweist, **dadurch gekennzeichnet, dass**
jeder Zylinder mit einer jeweiligen Ventilanordnung (V1, V2) verbunden ist,
die jeweilige Ventilanordnung ein Fluid durchlassen wird, wenn ein vorbestimmter Fluiddruck erreicht ist,
eine Bewegung des Mehrwegeventils den ersten oder zweiten Hydraulikzylinder (Z1, Z2) bewegt, und
wenn einer der Zylinder des ersten oder zweiten Zylinders (Z1, Z2) eine maximale Auslenkung erreicht, der Druck in dem Kreis größer als der vorbestimmte Fluiddruck (PRV2, PRV3) der jeweiligen Ventilanordnung (VA1, VA2) des jeweils anderen Zylinders des ersten oder zweiten Zylinders (Z1, Z2) ist, so dass sich der andere Zylinder des ersten oder zweiten Zylinders bewegt.

**2.** Landwirtschaftlicher Feldhäcksler nach Anspruch 1, wobei Zylinder (Z1, Z2) parallel angeordnet sind.

**3.** Landwirtschaftlicher Feldhäcksler nach Anspruch 1 oder 2, wobei jede Ventilanordnung (VA1, VA2) in Reihe mit einem jeweiligen Zylinder (Z1 bzw. Z2) angeordnet ist.

**4.** Landwirtschaftlicher Feldhäcksler nach einem der vorhergehenden Ansprüche, wobei jede Ventilanordnung (VA1, VA2) zwei parallel zueinander angeordnete Ventile (RV1, RV2, RV3, RV4) aufweist.

**5.** Landwirtschaftlicher Feldhäcksler nach Anspruch 4, wobei jede Ventilanordnung (VA1, VA2) ein direktes Sperrventil (RV1, RV4) und ein Druckablassventil (RV2, RV3) aufweist.

**6.** Landwirtschaftlicher Feldhäcksler nach Anspruch 4 oder 5, wobei jede Ventilanordnung (VA1, VA2) ein Ventil, das einen Fluidfluss in einer Richtung zulässt, und ein zweites Ventil aufweist, das einen Fluidfluss in einer anderen Richtung zulässt.

**7.** Landwirtschaftlicher Feldhäcksler nach einem der vorhergehenden Ansprüche, wobei der vorbestimmte Fluiddruck für ein Ventil (RV3) der jeweiligen Ventilanordnung des zweiten Zylinders größer ist als der Druck, der für die Bewegung des ersten Zylinders benötigt wird, multipliziert mit einem hydraulischen Verhältnis des zweiten Hydraulikzylinders.

**8.** Landwirtschaftlicher Feldhäcksler nach einem der vorhergehenden Ansprüche, wobei die Bewegung jedes Zylinders einen elektrischen Schalter aktiviert und/oder deaktiviert, der ein Signal an eine Steuer/Regel-Einheit sendet, die die Bewegung der Zylinder überwacht.

**EP 3 061 976 B1**

**Revendications**

1. Moissonneuse de fourrage agricole comprenant un tambour de hachage (2) comportant une pluralité de couteaux (2a) qui s'étendent transversalement sur la surface du tambour et forment un profil cylindrique externe autour du tambour lorsque le tambour est entraîné en rotation, un agencement d'affûtage de couteau (2c) situé au-dessus du tambour (2), dans laquelle l'agencement d'affûtage de couteau comprend un dispositif d'affûtage de couteau (4) et un volet (21) d'un logement (20) dans lequel le dispositif d'affûtage de couteau (4) est reçu, et un circuit hydraulique (1C) destiné à commander le mouvement du dispositif d'affûtage de couteau et du volet, dans laquelle ledit circuit comprend une source de pression, un collecteur de pression, une vanne à plusieurs orifices, un premier vérin hydraulique (Z1) qui déplace le dispositif d'affûtage de couteau et un second vérin hydraulique (Z2) qui déplace le volet, **caractérisée en ce que**,
   chaque vérin est raccordé à un agencement de vanne respectif (V1, V2),
   chaque agencement de vanne respectif assure le passage d'un fluide lorsqu'une pression de fluide prédéterminée est atteinte, le mouvement de la vanne à plusieurs orifices déplace les premier ou second vérins hydrauliques (Z1, Z2), et **en ce que** lorsque l'un desdits premier ou second vérins (Z1, Z2) atteint un déplacement maximum, la pression dans ledit circuit est supérieure à la pression de fluide prédéterminée (PRV2, PRV3) de l'agencement de vanne (VA1, VA2) respectif de l'autre desdits premier ou second vérins (Z1, Z2) de telle sorte que ledit autre desdits premier ou second vérins se déplace.

2. Moissonneuse de fourrage agricole selon la revendication 1, dans laquelle les vérins (Z1, Z2) sont agencés en parallèle.

3. Moissonneuse de fourrage agricole selon la revendication 1 ou 2, dans laquelle chaque agencement de vanne (VA1, VA2) est agencé respectivement en série avec un vérin (Z1, Z2) respectif.

4. Moissonneuse de fourrage agricole selon l'une quelconque des revendications précédentes, dans laquelle chaque agencement de vanne (VA1, VA2) comprend deux vannes (RV1, RV2, RV3, RV4) qui sont agencées parallèlement l'une à l'autre.

5. Moissonneuse de fourrage agricole selon la revendication 4, dans laquelle chaque agencement de vanne (VA1, VA2) comprend une vanne à blocage direct (RV1, RV4) et une vanne de limitation de pression (RV2, RV3).

6. Moissonneuse de fourrage agricole selon la revendication 4 ou 5, dans laquelle chaque agencement de vanne (VA1, VA2) comprend une première vanne qui permet un écoulement de fluide dans un sens et une seconde vanne qui permet un écoulement de fluide en sens inverse.

7. Moissonneuse de fourrage agricole selon l'une quelconque des revendications précédentes, dans laquelle la pression de fluide prédéterminée pour une vanne (RV3) de l'agencement de vanne respectif du second vérin est supérieure à la pression requise de manière à déplacer le premier vérin multipliée par un rapport hydraulique du second vérin hydraulique.

8. Moissonneuse de fourrage agricole selon l'une quelconque des revendications précédentes, dans laquelle le mouvement de chaque vérin active et/ou désactive un commutateur électrique qui envoie un signal à une unité de commande qui contrôle le déplacement des vérins.

Fig 1

Fig 2

Fig. 3

Fig 4

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- GB 2479566 A
- CA 2522387
- DE 102007057624